(19) **Europäisches Patentamt / European Patent Office / Office européen des brevets**

(11) **EP 1 930 302 A1**

(12) **EUROPEAN PATENT APPLICATION**
published in accordance with Art. 153(4) EPC

(43) Date of publication:
**11.06.2008 Bulletin 2008/24**

(51) Int Cl.:
*C03C 17/23* (2006.01)          *B32B 9/00* (2006.01)
*B32B 17/06* (2006.01)        *B32B 17/10* (2006.01)
*C03C 17/34* (2006.01)        *C03C 17/42* (2006.01)

(21) Application number: **06810725.9**

(22) Date of filing: **28.09.2006**

(86) International application number:
**PCT/JP2006/319277**

(87) International publication number:
**WO 2007/037313 (05.04.2007 Gazette 2007/14)**

(84) Designated Contracting States:
**DE FR**

(30) Priority: **28.09.2005 JP 2005282037**

(71) Applicants:
• **NEC Corporation**
**Minato-ku**
**Tokyo 108-8001 (JP)**
• **NEC TOSHIBA Space Systems, Ltd.**
**Fuchu-shi**
**Tokyo (JP)**

(72) Inventors:
• **MORI, Toru**
**Minato-ku, Tokyo 1088001 (JP)**
• **KUBO, Yoshimi**
**Minato-ku, Tokyo 1088001 (JP)**
• **OKAMOTO, Akira**
**Fuchu-shi, Tokyo 1838551 (JP)**
• **NAKAMURA, Yasuyuki**
**Fuchu-shi, Tokyo 1838551 (JP)**

(74) Representative: **Vossius & Partner**
**Siebertstrasse 4**
**81675 München (DE)**

(54) **WINDOWPANE AND WINDOW FILM**

(57)     Use of a glass having a high heat-insulating property as a windowpane leads to an increase of the room temperature due to the heat caused by indoor living even in a state relatively low in outside air temperature and requires that the room temperature be forcibly reduced using an air conditioner. A windowpane has a phase-change substance film formed on a glass plate, wherein the phase-change substance film comprises an Mn-containing perovskite oxide represented by $(A_{1-x}B_x)MnO_3$; A represents at least one of rare-earth ions of La, Pr, Nd, and Sm; B represents at least one of alkaline-earth ions of Ca, Sr, and Ba; and $0 \leq x < 1$. The windowpane having a heat control function according to the present invention can emit the heat of room air to outside air in a state in which the room temperature is higher than the outside air temperature.

FIG. 1

**Description**

Technical Field

The present invention relates to windowpanes and window films, particularly to windowpanes and window films which have a heat control function.

Background Art

In a temperate climate, air temperature becomes relatively low during the winter season and relatively high during the summer season. For the climate, traditional houses had structures relatively well ventilated so that they are comfortable during the summer. In winter, the structures had the disadvantages that the interior of rooms takes a long time to become warm because of the influence of outside air when a heater is turned on to warm the interior temperature, and further cools off rapidly upon turning off the heater.

In recent years, the use of a heating and cooling equipment such as an air-conditioner has enabled the interior to be readily cooled. For efficiency enhancement in a cooling equipment, a house preferably has an airtight structure; thus, in a recent house the structure having good airtightness and further having a high heat-insulating property is adopted. The enhanced house airtightness has improved not only the efficiency of cooling but also that of heating.

For that purpose, a windowpane is subjected to designing such as double-glazing in consideration of the heat-insulating property. To further improve the heat-insulating efficiency, the glass surface is provided, for example, with a high-reflectance metal coating (Low-E film: Low-Emissivity) which reflects infrared emission. In addition, for the purpose of saving energy, blocking heat rays, cutting UV, taking precautions against an earthquake, preventing disasters, protecting privacy or the like, there is a method in which an organic resin film is applied to a windowpane. In this case, depending on the purpose, the organic resin film may be provided with a high-reflectance metal coating (Low-E film) or the like.

The windowpane, in which the high-reflectance metal coating (Low-E film or the like) is formed to enhance the efficiency of air-conditioning, is transparent and has a function of moderately absorbing solar emission heat from the outside and of suppressing heat exchange between the interior and exterior.

A high heat-insulated house has a structure in which the heat caused by indoor living is also less easily exhausted to the outdoor, which leads to an increase of the room temperature due to the heat even in a state relatively low in outside air temperature and requires that the room temperature be forcibly reduced using an air conditioner.

Therefore, the heat caused by indoor living is less easily exhausted to the outdoor as a detrimental result of the high heat-insulating effect in the spring and autumn when the outdoor temperature is relatively low, or under an environment in which the outside air temperature is not relatively increased in summer, such as Hokkaido, the Tohoku region and a cold upland. This has required that the room temperature be forcibly reduced using an air conditioner despite the low outside air temperature.

Thus, there is a need for the development of a windowpane which reduces the cooling load or which exhausts the heat caused by indoor living to the outdoor without using an air conditioner.

Similarly, in recent automobiles, the improved airtightness (heat-insulating properties) has eliminated the indoor thereof getting colder in a state in which they are parked in the outdoors in winter, but, in summer, the indoor has an extremely increased temperature compared to the outside air.

The above problem can be solved by using a material which not easily emits heat at low temperature and easily emits heat when it reaches a certain temperature or higher (it is further necessary to use a Low-E glass).

As a thermal control device for suitably temperature-controlling equipment aboard a spacecraft such as an artificial satellite, Patent Documents 1 and 2 disclose a phase-change substance made of an Mn-containing perovskite oxide represented by the compositional formula $(A_{1-x}B_x)MnO_3$, which is an insulating substance in a higher-temperature phase and has a metallic property in a lower-temperature phase, and which has a larger heat-emitting amount in the higher-temperature phase and has a smaller heat-emitting amount in the lower-temperature phase,

The phase-change substance can provide a thermal control device which is capable of autonomous temperature control and has a high reliability without having a moving part such as a thermal louver as a conventional thermal control device.

However, the above phase-change substance is a material having a high absorption for the wavelength range (0.3 to 2.5 $\mu$m) of sunlight.

Thus, when a windowpane is coated with the phase-change substance described in patents documents 1 and 2, at a thickness of a few ten to several hundred micrometers in place of the hiah-reflectance metal coating (Low-E film or the like), there has been a problem that the windowpane comes not to transmit light, is impaired in transparency and loses a function as a windowpane.

Patent Document 1: Japanese Patent Application Laid-Open No. 11-217562
Patent Document 2: Japanese Patent Application Laid-Open No. 2002-120799

Disclosure of the Invention

(Problem to be Solved by the Invention)

The present invention provides a windowpane, in which a phase-change substance made of an Mn-containing perovskite oxide represented by $(A_{1-x}B_x)MnO_3$ is used, and which reduces the cooling load or which exhausts the heat caused by indoor living to the outdoor without using an air conditioner.

(Means for Solving the Problem)

The present invention is a windowpane having a phase-change substance film formed on a glass plate, wherein the phase-change substance film comprises a phase-change substance which is an Mn-containing perovskite oxide represented by $(A_{1-x}B_x)MnO_3$; A represents at least one of rare-earth ions of La, Pr, Nd, and Sm; B represents at least one of alkaline-earth ions of Ca, Sr, and Ba; and $0 \le x < 1$. In addition, a substrate substance film may be formed between the glass plate and the phase-change substance film.

The substrate substance film may be made of either a first substrate substance which is zirconium oxide, aluminum oxide, magnesium oxide, lanthanum oxide, tantalum oxide, or silicon nitride; or a second substrate substance which is strontium titanate, lead zirconate titanate, lead lanthanum zirconate titanate, or aluminum acid lanthanum. Alternatively, as the substrate substance film, a first substrate substance film made of zirconium oxide, aluminum oxide, magnesium oxide, lanthanum oxide, tantalum oxide, or silicon nitride, and a second substrate substance film made of strontium titanate, lead zirconate titanate, lead lanthanum zirconate titanate, or aluminum acid lanthanum may be formed on the glass plate in that order.

The phase-change substance is preferably $(La_{1-x}Sr_x)MnO_3$ ($0 < x < 1$). Here, $0.175 \le x \le 0.2$ is more preferable, and the phase-change substance film preferably has a thickness of 50 nm or more and of 500 nm or less.

The glass plate is preferably made of borosilicate glass or quartz glass.

The present invention may also be a window film having a phase-change substance formed on one side of an organic resin film, wherein the phase-change substance film comprises a phase-change substance which is an Mn-containing perovskite oxide represented by $(A_{1-x}B_x)MnO_3$; A represents at least one of rare-earth ions of La, Pr, Nd, and Sm; B represents at least one of alkaline-earth ions of Ca, Sr, and Ba; and $0 \le x < 1$.

An adhesive film is preferably formed on the side of the organic resin film, which is opposite of the side on which the phase-change substance film is formed.

The phase-change substance is preferably $(La_{1-x}Sr_x)MnO_3$ ($0 < x < 1$); $0.175 \le x \le 0.2$ is more preferable; and the phase-change substance film preferably has a thickness of 50 nm or more, and of 500 nm or less.

The present invention may also be a windowpane having the above window film applied to a glass plate.

(Effect of the Invention)

The windowpane having a heat control function according to the present invention can emit the heat of room air to outside air in a state in which the room temperature is higher than the outside air temperature because it can produce a heat-insulation effect in winter when the outside air temperature is low, and produce a heat-emission effect in summer when the outside air temperature is high.

The windowpane can be used under an environment in which the outside air temperature is lower than the room temperature, such as in Hokkaido, the Tohoku region or a cold upland, or for an automobile under the burning sun to exhaust the indoor heat to the outdoor, which enables the indoor temperature to be kept low.

Brief Description of the Drawings

Figure 1 is a schematic cross-sectional view describing a first embodiment of the present invention;
Figure 2 is a schematic cross-sectional view describing a second embodiment of the present invention;
Figure 3 is a graph showing the temperature dependence of the emittance of $(La_{1-x}Sr_x)MnO_3$ which is a phase-change substance usable in the present invention;
Figure 4 is a graph showing the relation between the film thickness and transmittance of a $(La_{1-x}Sr_x)MnO_3$ film;
Figure 5 is a drawing describing, when the present invention is used as a windowpane, the function thereof;
Figure 6 is a schematic cross-sectional view in which the present invention is applied to a windowpane having a double structure; and
Figure 7 is a graph showing the temperature characteristics of emittance of phase-change substance films having thicknesses of 200 nm and 600 nm.

(Description of Symbols)

1 Phase-change substance film
2 Substrate substance film
2-1 First substrate substance film
2-2 Second substrate substance film
3 Glass plate
3-1 Windowpane

3-2     Windowpane

5      Organic resin thin film (organic resin film)

Best Mode for Carrying Out the Invention

The present invention relates to a windowpane which, by the formation of a phase-change substance film on the glass plate surface, exhibits a heat-insulating function because of the low emittance of the phase-change substance film when the outside air temperature is low and exhibits the function of exhausting the indoor heat to the outdoor because of the higher emittance of the phase-change substance film applied to the glass plate surface when the outside air temperature is high.

The phase-change substance film may be directly formed on the glass plate. Alternatively, the phase-change substance film may be formed on a film of an organic resin or the like, followed by applying the resultant window film to the glass plate.

As the phase-change substance, an Mn-containing perovskite oxide represented by $(A_{1-x}B_x)MnO_3$ can be used. This phase-change substance has a low transmittance, and therefore is required to transmit light to some degree when used in a windowpane.

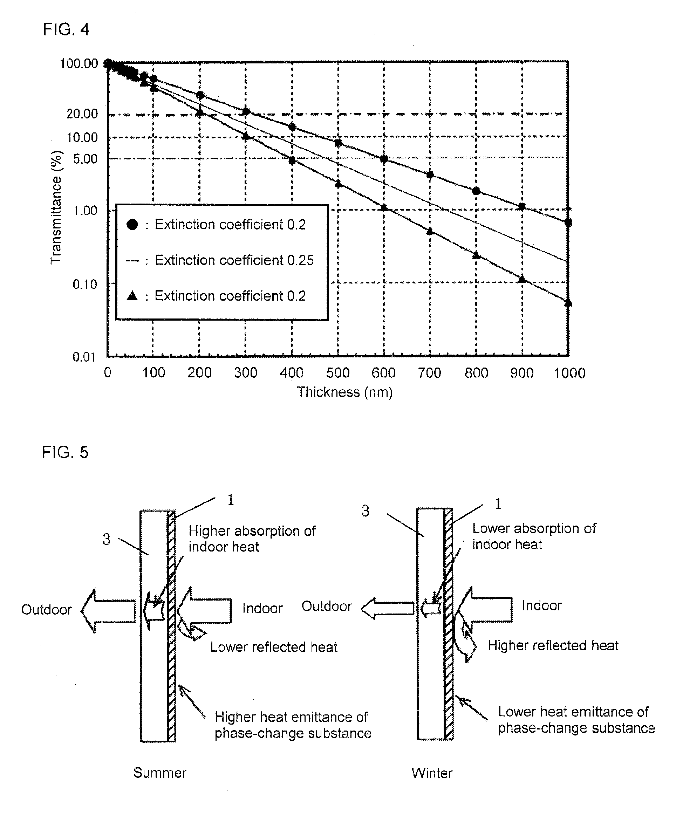

For a $(La_{1-x}Sr_x)MnO_3$ film, the relation between the thickness and transmittance is shown in Figure 4.

The transmittance (p) of an optical thin film can be calculated from equation (1):

$$p = \exp(-4\,\pi k \cdot d/\lambda) \qquad (1)$$

in the equation (1), k is an extinction coefficient; d is the thickness of a substance; and $\lambda$ is a wavelength of light in vacuum.

The extinction coefficient (k) of $(La_{1-x}Sr_x)MnO_3$ is about 0.2 to 0.3 in the wavelength range of 0.25 to 0.8 $\mu$m which is the visible light area.

Figure 4 shows the relation between the film thickness and transmittance of the $(La_{1-x}Sr_x)MnO_3$ film at the wavelength $\lambda$ of 0.5 $\mu$m when the extinction coefficient (k) is set to 0.2, 0.25, or 0.3. The following is described by setting the extinction coefficient (k) to 0.25.

When the structure in which a $(La_{1-x}Sr_x)MnO_3$ film is formed on a glass plate is used as the windowpane, it preferably has a transmittance of 5 % or more, more preferably 20 % or more, still more preferably 30 % or more.

The transmittance of 5 % or more enables light from the outside to be taken in a room and therefore makes it possible to look outside from inside the room. The transmittance of 20 % or more does not significantly allow something different from conventionally used windowpanes to be felt; the transmittance of 30 % or more provokes no such feeling.

A film thickness of 500 nm or less can secure a transmittance of 5 %; 250 nm or less and 200 nm or less can virtually secure transmittances of 20 % and 30 %, respectively.

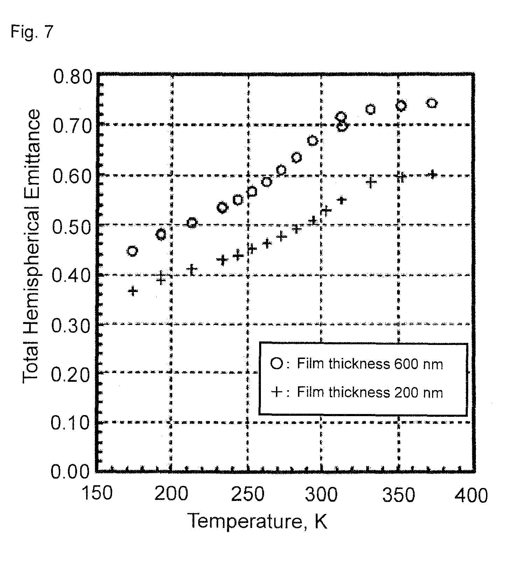

Figure 7 is a graph showing the temperature characteristics of emittance of phase-change substance films having thicknesses of 200 nm and 600 nm. A thinner film thickness tends to increase the transition temperature Tc and decrease the change width $\Delta\epsilon$ of the emittance; however, it is not a significant problem in the case of the film thickness of 200 nm, and there is confirmed no problem in the case of the film thickness of down to 100 nm. A film thickness of less than 100 nm, particularly less than 50 nm, decreases the change width $\Delta\epsilon$ of the emittance and eliminates the difference of the emittance due to temperature.

As a result, the film thickness is preferably 50 to 500 nm, more preferably 100 to 250 nm.

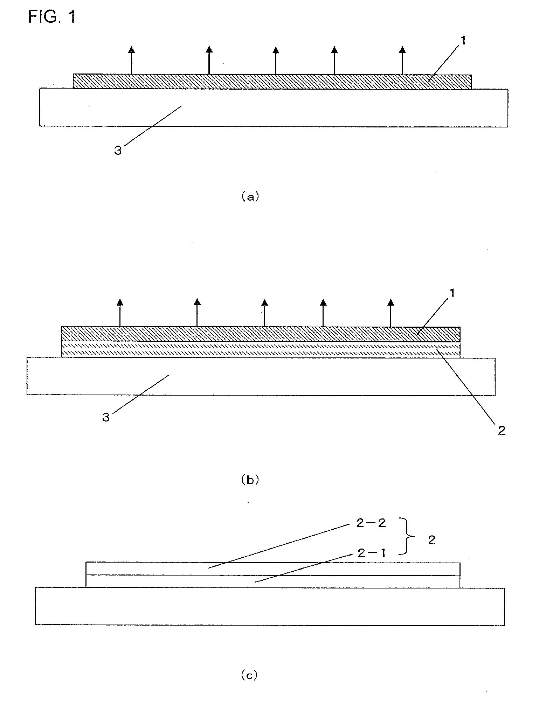

Figure 1 is a schematic cross-sectional view describing the constitution and operation of the windowpane of a first embodiment of the present invention.

In Figure 1(a), phase-change substance film 1 is laminated on one side of glass plate 3. The phase-change substance constituting phase-change substance film 1 is an Mn-containing perovskite oxide represented by $(A_{1-x}B_x)MnO_3$, wherein A represents at least one of rare-earth ions of La, Pr, Nd, and Sm; B represents at least one of alkaline-earth ions of Ca, Sr, and Ba; and $0 \leq x < 1$. The heat-emitting surface is the surface of phase-change substance film 1.

To improve the adhesion of glass plate 3 to phase-change substance film 1, substrate substance film 2 may be formed between the glass plate 3 and phase-change substance film 1 (Figure 1(b)). The heat-emitting surface is the surface of phase-change substance film 1.

Substrate substance film 2 may be formed: by forming a film of zirconium oxide, aluminum oxide, magnesium oxide, lanthanum oxide, tantalum oxide or silicon nitride as first substrate substance film 2-1 and then by forming a film of a perovskite-type oxide such as strontium titanate, lead zirconate titanate, lead lanthanum zirconate titanate and aluminum acid lanthanum as second substrate substance film 2-2; or by forming only either first substrate substance film 2-1 or second substrate substance film 2-2 (Figure 1(c)).

The formation of first substrate substance film 2-1 can improve the adhesive strength between glass plate 3 and phase-change substance film 1. Second substrate substance film 2-2 is a perovskite-type oxide film, which is relatively easily formed also on glass plate 3, and is relatively close in crystalline structure and lattice constant to phase-change substance film 1 made of an Mn-containing perovskite oxide represented by $(A_{1-x}B_x)MnO_3$, wherein A represents at least one of rare-earth ions of La, Pr, Nd, and Sm; B represents at least one of alkaline-earth ions of Ca, Sr, and Ba; and $0 \leq x < 1$. Thus, when the phase-change substance film is formed by a thin film formation method, the temperature for film formation on second substrate substance film 2-2 can be lower compared to the film formation on glass plate 3 or first substrate substance film 2-1.

First substrate substance film 2-1 for enhancing the adhesive strength to the glass plate has a thickness of 10 to 100 nm, preferably 20 to 50 nm. Second substrate substance film 2-2 preferably has a thickness of 10 to 100 nm, more preferably 20 to 50 nm.

When second substrate substance film 2-2 is laminated on first substrate substance film 2-1, the sum of thicknesses of first substrate substance film 2-1 and second substrate substance film 2-2 is preferably 20 to 200 nm, more preferably 40 to 100 nm, still more preferably 30 to 60 nm.

The functions of windowpanes having the structures in Figures 1(a) and (b) will be described. The windowpane in Figure 1(a) is different from that in Figure 1(b) in that the substrate substance film is formed between the glass plate and the phase-change substance film, but exhibits the same function as the glass plate having the structure in Figure 1(a), which is not provided with a substrate substance film, because the substrate substance film has a sufficiently thin thickness compared to the glass plate.

When phase-change substance film 1 has a higher temperature than the transition temperature Tc, the film 1 has a high emittance, which increases the heat-emitting amount of the windowpane.

In contrast, when phase-change substance film 1 has a lower temperature than the transition temperature Tc, the film 1 has a reduced emittance, which decreases the heat-emitting amount of the windowpane.

As a result, the use of the windowpane having a structure in Figure 1 as a windowpane in a house or the like:

> 1. eliminates the cooling of the indoor in the Hokkaido-Tohoku region or a cold upland, where the outside air temperature is relatively low in summer and allowing the windows to be closed makes the indoor temperature higher than the outside air temperature, because it can reduce the temperature in a window-dosed state; and
> 2. in the case of 1, cannot necessarily enhance the efficiency of cooling because it promotes the flow of heat from the outdoor into the indoor.

In addition, using a Low-E glass in a windowpane of an automobile to form the phase transition substance film of the present invention thereon can reduce the elevation of the temperature in the automobile to the outside air temperature or more even when the parking is carried out under the burning sun in summer.

The windowpane having the structure in Figure 1(a) can be produced by the following method.

In a case where $(La_{1-x}Sr_x)MnO_3$ is used as an Mn-containing perovskite oxide, raw material oxides and carbonates ($La_2O_3$, $SrCO_3$ and $Mn_2O_3$) are weighed into a desired composition ratio, mixed and calcined at 1,000 to 1,200 °C. After calcination, the calcined phase-change substance can be pulverized using a ball mill or the like to be in a powder form. The powder is then mixed with a binder resin such as ethyl cellulose to be in a paste form, followed by applying the paste to the glass plate or substrate substance film to form a phase-change substance film.

When the phase-change substance film having a thickness of 250 nm is formed on glass plate 3, the paste is applied (using a spray, roll-coat, dip or spin-coat method or the like) so as to provide a film thickness of 250 nm after sintering. When the glass plate used is made of borosilicate glass, sintering is then performed at 800 to 850 °C to provide the windowpane. When the glass plate used is made of quartz glass, sintering can be carried out at 800 to 1,600 °C because the quartz glass has a softening point of 1,650 °C. The sintering temperature of 800°C or higher enables the formation of the phase-change substance film and a substrate substance film to be described.

The upper limit temperature of firing varies depending on the material of the glass plate used in the windowpane; however, a glass plate is preferably selected which has a softening point of 800 °C or higher and enables the sintering at a temperature of 800 °C or higher.

When the phase-change substance film is formed on the glass plate using a sintering method, a sintering temperature of 800°C or higher provides a flat film irrespective of the particle diameter, which eliminates the need for particularly specifying the particle diameter.

The windowpane having the structure in Figure 1(b) can be produced by the following method.

Zirconium oxide is pulverized using a ball mill or the like and is then mixed with a binder such as ethyl cellulose to produce a paste. The zirconium oxide in a paste form is applied to glass plate 3 so as to provide a film thickness of 20 nm after sintering, followed by sintering it at 820 °C to form substrate substance film 2 on the glass plate.

A sputtering method or a CVD method may be used.

Thereafter, as in Figure 1(a), a phase-change substance film in a paste form is applied to substrate substance film 2 so as to provide a film thickness of 250 nm after sintering. When the glass plate used is made of borosilicate glass, sintering is performed at 820°C to provide the windowpane having the structure in Figure 1(b).

A substrate substance film on the glass plate may be formed: by forming a zirconium oxide film with a thickness of 20 nm, which provides the first substrate substance film, by a sputtering method (or a CVD method); and by further forming a strontium titanate film with a thickness of 20 nm, which provides the second substrate substance film, by a sputtering method (or a CVD method); thereafter, a phase-change substance film with a thickness of 250 nm may be formed thereon by a sputtering method (an oxide thin film formation method such as vapor deposition, aerosol deposition, sol-gel and PLD methods).

Although the detail will be described in the second embodiment, the paste may also be solidified at 150°C for about 24 hours without sintering. In this case, a glass plate which does not have a thermal resistance of 800°C or higher can also be used.

In this case, a paste, in which particles of a pulverized phase-change substance are mixed with an organic resin, is preferably used. The organic resin is not particularly limited provided that it is a material capable of being made in a paste form in a state in which the phase-change substance particles are mixed therewith; however, a thermoset resin is preferably used in view of adhesion in an applied state.

The phase-change substance film is required to have surface flatness; thus, the maximum value of the particle diameter of the substance is preferably smaller than the thickness of the thermoset resin film formed by solidification and more preferably 85 % or less, still more preferably 60 % or less of the film thickness.

The solidification may be performed by selecting a temperature at which the solidification is completed within 24 hours in the solidification temperature range of the resin.

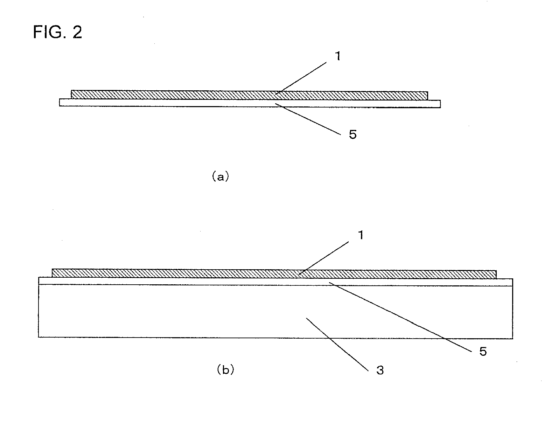

As a second embodiment, the structure of the windowpane shown in Figure 2 will be described. Figure 2(a) is a window film in which a film obtained by mixing phase-change substance film 1 in an organic resin is formed on organic resin thin film (organic resin film) 5. Then, the window film may be applied to a glass plate (Figure 2(b)).

When used in a windowpane, the organic resin film is preferably a heat-resistant resin having high transparency; preferred is an acrylic resin or a cyclic olefin resin.

If the window film is in a roll form and directly applied to the glass plate from the roll, the organic resin film can be extremely thinned into a thickness of about 1 to 5 $\mu$m because the window film can be applied under tension. On the other hand, if the thin film is applied to the object in the fashion that wall paper is applied, the organic resin film preferably has a thickness of 15 $\mu$m or more to keep the flatness of the phase change film.

When the window film is applied to the object, it preferably has a film thickness of about 15 to 100 $\mu$m.

An adhesive film (not shown) is preferably formed on the side of the organic resin film, which is opposite of the side on which the phase-change substance film is formed. When the window film is applied to the glass plate from the roll, the adhesive film may be formed on the glass plate.

When the paste is formed, the ratio of the binder to the phase-change substance or the ratio of the organic resin (thermoset resin) thereto is not particularly limited; they have only to be compounded so that the film thickness for making into a desired thickness after sintering or solidification is made uniform by the application. When the paste is applied to the organic resin film before solidification, an insufficient ratio of the phase-change substance to the thermoset resin does not enable the function of the phase-change substance to be sufficiently exhibited; thus, preferred is 30% by weight or more, more preferably 50% by weight or more.

The upper limit has only to provide uniform film thickness and an applicable viscosity and may be properly selected depending on the film thickness formed and the properties of the thermoset resin used.

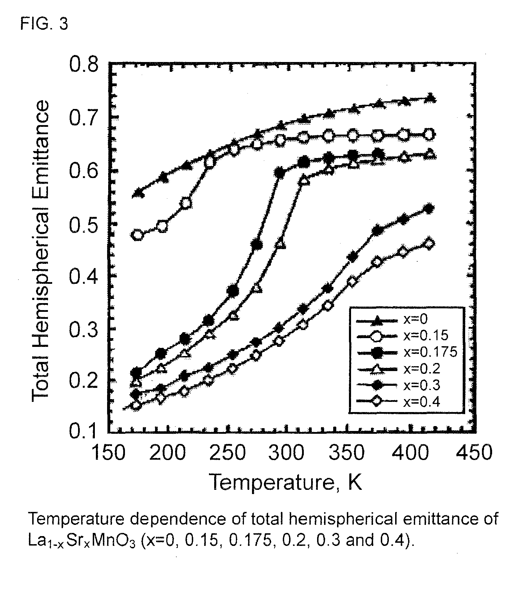

Figure 3 is a graph showing the temperature dependence of the emittance of $(La_{1-x}Sr_x)MnO_3$ which is a phase-change substance. When x = 0.175 or 0.2, the substance showed a rapid change in emittance and the transition temperature Tc was 283 K or 309 K, which are near room temperature; and the emittance change width $\Delta\varepsilon$ is about 0.4 which is the largest value.

For $(La_{1-x}Sr_x)MnO_3$, the mixing ratio x is preferably 0.175 to 0.2. The Tc also does not particularly become a problem because it is close to room temperature, at 283 to 309 K (about 10 to 36°C).

Next, for a case where the windowpane having a heat control function is applied, the heat control function thereof is described based on Figure 5.

Phase-change substance film 1 is on the indoor side of the windowpane. When a temperature difference exists between the outdoor and indoor, the windowpane has a temperature between the outdoor and indoor temperatures.

The temperature of the windowpane being lower than the transition temperature Tc reduces the emittance of phase-change substance film 1 provided on the indoor side of the windowpane, makes less easy the emission of the indoor heat to the outdoor and improves the efficiency of heating in the indoor.

In contrast, the temperature of the windowpane being higher than the transition temperature Tc increases the emittance of phase-change substance film 1 provided on the indoor side of the windowpane, makes easy the emission of the indoor heat to the outdoor and less easily renders the indoor temperature higher than the outdoor temperature, which:

1. results in that, even allowing the windows to be closed, heat is not persisted in the indoor to make the indoor hotter than the outdoor when the outdoor temperature is relatively low as in the Tohoku region, Hokkaido and a cold upland; and
2. also has the advantage of improving the efficiency of cooling during the air-conditioning of the indoor when the outdoor temperature is relatively high.

In addition, the use as an automobile windowpane has the advantages of keeping the automobile interior in a state cooled by an air-conditioner during on the road and suppressing an increase in the interior temperature even in a state in which the automobile is parked in an open space because the exterior heat is emitted to the exterior.

In this respect, the phase-change substance film is efficient on any side of the interior and exterior; however, it is more preferably effective on the exterior side.

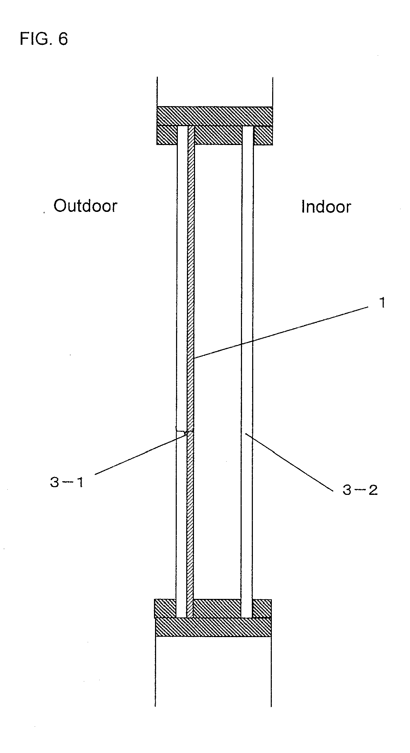

In Figure 6, a windowpane is double-glazed to provide a phase-change substance film on the indoor side surface of the outside windowpane. In this windowpane structure, the air layer between the windowpanes serves as a heat insulation; further, the formation of phase-change substance film 1 on the indoor side surface of outside windowpane 3-1 makes the temperature of outside windowpane 3-1 close to the outdoor temperature and renders the temperature of inside windowpane 3-2 close to room temperature.

When windowpane 3-1 has a temperature lower than the transition temperature Tc, the phase-change substance film 1 formed on windowpane 3-1 has a temperature lower than Tc and a low emittance. On the other hand, windowpane 3-2 is less subject to heat emission from windowpane 3-1 and becomes close to the indoor temperature; thus, heat emission from the indoor to the outdoor less easily occurs.

As a result, the efficiency of heating can be remarkably increased in winter.

In contrast, when windowpane 3-1 has a temperature higher than the transition temperature Tc, the phase-change substance film 1 formed on windowpane 3-1 has a temperature higher than Tc and a high emittance.

Here, when windowpane 3-2 has a temperature higher than that of windowpane 3-1, the indoor heat is simply emitted to the outdoor lower in temperature; thus, the indoor temperature can be reduced, which enables the efficiency of cooling to be improved in summer.

In this respect, providing the phase-change substance film on the side of the inside windowpane 3-2, which is opposite of windowpane 3-1, is more effective.

**Claims**

1. A windowpane having a phase-change substance film formed on a glass plate, wherein the phase-change substance film comprises a phase-change substance which is an Mn-containing perovskite oxide represented by $(A_{1-x}B_x)MnO_3$; A represents at least one of rare-earth ions of La, Pr, Nd, and Sm; B represents at least one of alkaline-earth ions of Ca, Sr, and Ba; and $0 \leq x < 1$.

2. The windowpane according to claim 1, wherein a substrate substance film is formed between the glass plate and the phase-change substance film.

3. The windowpane according to claim 2, wherein the substrate substance film is made of either a first substrate substance which is zirconium oxide, aluminum oxide, magnesium oxide, lanthanum oxide, tantalum oxide, or silicon nitride, or a second substrate substance which is strontium titanate, lead zirconate titanate, lead lanthanum zirconate titanate, or aluminum acid lanthanum.

4. The windowpane according to claim 2, having, as the substrate substance film: a first substrate substance film made of zirconium oxide, aluminum oxide, magnesium oxide, lanthanum oxide, tantalum oxide, or silicon nitride; and a second substrate substance film made of strontium titanate, lead zirconate titanate, lead lanthanum zirconate titanate, or aluminum acid lanthanum; formed on the glass plate in that order.

5. The windowpane according to any one of claims 1 to 4, wherein the phase-change substance is $(La_{1-x}Sr_x)MnO_3$ $(0 < x < 1)$.

6. The windowpane according to claim 5, wherein $0.175 \leq x \leq 0.2$.

7. The windowpane according to any one of claims 1 to 6, wherein the phase-change substance film has a thickness of 50 nm or more and of 500 nm or less.

8. The windowpane according to any one of claims 1 to 7, wherein the glass plate is made of borosilicate glass or quartz glass.

9. A window film having a phase-change substance formed on one side of an organic resin film, wherein the phase-change substance film comprises a phase-change substance which is an Mn-containing perovskite oxide represented by $(A_{1-x}B_x)MnO_3$; A represents at least one of rare-earth ions of La, Pr, Nd, and Sm; B represents at least one of alkaline-earth ions of Ca, Sr, and Ba; and $0 \leq x < 1$.

10. The window film according to claim 9, wherein an adhesive film is formed on the side of the organic resin film, which is opposite of the side on which the phase-change substance film is formed.

11. The window film according to claim 9 or 10, wherein the phase-change substance is $(La_{1-x}Sr_x)MnO_3$ $(0 < x < 1)$.

12. The window film according to claim 11, wherein $0.175 \leq x \leq 0.2$.

13. The window film according to any one of claims 9 to 12, wherein the phase-change substance film has a thickness of 50 nm or more, and of 500 nm or less.

14. A windowpane having the window film according to any one of claims 9 to 13 applied on a glass plate.

FIG. 1

(a)

(b)

(c)

FIG. 2

(a)

(b)

FIG. 3

Temperature dependence of total hemispherical emittance of
$La_{1-x}Sr_xMnO_3$ (x=0, 0.15, 0.175, 0.2, 0.3 and 0.4).

FIG. 4

FIG. 5

Summer          Winter

FIG. 6

Outdoor                    Indoor

1

3−1

3−2

Fig. 7

**INTERNATIONAL SEARCH REPORT**

| International application No. |
|---|
| PCT/JP2006/319277 |

A. CLASSIFICATION OF SUBJECT MATTER
*C03C17/23*(2006.01)i, *B32B9/00*(2006.01)i, *B32B17/06*(2006.01)i, *B32B17/10*
(2006.01)i, *C03C17/34*(2006.01)i, *C03C17/42*(2006.01)i

According to International Patent Classification (IPC) or to both national classification and IPC

B. FIELDS SEARCHED

Minimum documentation searched (classification system followed by classification symbols)
C03C17/23, B32B9/00, B32B17/06, B32B17/10, C03C17/34, C03C17/42

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-4795 A  (National Institute of Advanced Industrial Science and Technology), 08 January, 2004 (08.01.04), Claims 1, 7 to 9, 11 to 15; Par. Nos. [0030], [0031] & US 2003/0196454 A1 | 1-14 |
| Y | JP 11-217562 A  (NEC Corp.), 10 August, 1999 (10.08.99), Claims 1, 3; Par. No. [0009] & US 2001/0027856 A1    & EP 0919647 A1 | 1-14 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search       20 October, 2006 (20.10.06) | Date of mailing of the international search report       31 October, 2006 (31.10.06) |
|---|---|
| Name and mailing address of the ISA/       Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/319277

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2002-120799 A  (NEC Toshiba Space System Kabushiki Kaisha), 23 April, 2002 (23.04.02), Claims 13, 16, 17; Par. Nos. [0021], [0022], [0028]; Fig. 1 & US 2002/0003229 A1    & EP 1170208 A2 | 1-14 |
| Y | JP 10-62620 A  (Mitsui Toatsu Chemicals, Inc.), 06 March, 1998 (06.03.98), Claims 1, 9 (Family: none) | 9-14 |

Form PCT/ISA/210 (continuation of second sheet) (April 2005)

## INTERNATIONAL SEARCH REPORT

International application No.

PCT/JP2006/319277

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an
   extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
   The subject matter of claims 1-8 pertains to a windowpane comprising a
glass plate and, formed thereon, a film of a phase-change substance comprising
a perovskite oxide, while the subject matter of claims 9-14 pertains to a
window film comprising an organic resin film and, formed thereon, a film
of a phase-change substance comprising a perovskite oxide.  The two subject
matters have a matter common therebetween which resides in that a film of
a phase-change substance comprising a perovskite oxide is used.
   However, a film of a phase-change substance comprising a perovskite oxide
is not novel because it is described in, e.g., JP 11-217562 A.  It is hence
(continued to extra sheet)

1. ☐ As all required additional search fees were timely paid by the applicant, this international search report covers all searchable
   claims.

2. ☒ As all searchable claims could be searched without effort justifying an additional fee, this Authority did not invite payment of
   any additional fee.

3. ☐ As only some of the required additional search fees were timely paid by the applicant, this international search report covers
   only those claims for which fees were paid, specifically claims Nos.:

4. ☐ No required additional search fees were timely paid by the applicant.   Consequently, this international search report is
   restricted to the invention first mentioned in the claims; it is covered by claims Nos.:

**Remark on Protest**
the

☐ The additional search fees were accompanied by the applicant's protest and, where applicable,
payment of a protest fee..

☐ The additional search fees were accompanied by the applicant's protest but the applicable protest
fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

International application No.

PCT/JP2006/319277

Continuation of Box No.III of continuation of first sheet(2)

not a special technical feature.
   Consequently, there is no special technical feature common among all of claims 1-14. Claims 1-14 do not comply with the requirement of unity of invention.

Form PCT/ISA/210 (extra sheet) (April 2005)

**REFERENCES CITED IN THE DESCRIPTION**

**Patent documents cited in the description**

- JP 11217562 A

- JP 2002120799 A